# EUROPÄISCHE PATENTSCHRIFT

(11) **EP 2 251 495 B1**
(45) Veröffentlichungstag und Bekanntmachung des Hinweises auf die Patenterteilung: **03.07.2019**
(21) Anmeldenummer: 10161775.1
(22) Anmeldetag: 03.05.2010
(51) Int. Cl.: E03B 7/07, F16L 41/08, E03B 7/09

(54) **Wasseranschlussanordnung mit einem Anschlussstück für eine vereinfachte Montage einer Anschlusseinrichtung, insbesondere eines Wasserbehandlungsgeräts**
Water connection assembly with a connection piece for simplified fitting of a connection device, in particular a water treatment device
Dispositif de prise d'eau doté d'une pièce de raccordement pour un montage simplifié d'un dispositif de raccordement, notamment un appareil de traitement de l'eau

(30) Priorität: 06.05.2009 DE 102009002873
(43) Veröffentlichungstag der Anmeldung: 17.11.2010
(73) Patentinhaber: Judo Wasseraufbereitung GmbH, 71364 Winnenden (DE)
(72) Erfinder: Söcknick, Ralf, 70806 Kornwestheim (DE)
(74) Vertreter: Kohler Schmid Möbus Patentanwälte

(56) Entgegenhaltungen:
- EP-A2- 1 128 120
- EP-A2- 1 247 909
- DE-C2- 19 529 189
- US-B1- 6 390 509

## Beschreibung

Die Erfindung betrifft eine Wasseranschlussanordnung, umfassend
- ein Anschlussstück zum Einbau in die Rohrleitung eines Wassernetzes, insbesondere eines Hauswassernetzes,
- und eine Anschlusseinrichtung, insbesondere ein Wasserbehandlungsgerät oder eine Armatur,
wobei das Anschlussstück einen Flansch zum Anschließen der Anschlusseinrichtung und die Anschlusseinrichtung einen dazu passenden Gegenflansch aufweist,
wobei in der Flanschebene des Flansches sowohl ein Anschluss für einen Wasserzulauf zur Anschlusseinrichtung als auch ein Anschluss für einen Wasserrücklauf von der Anschlusseinrichtung ausgebildet ist,
wobei der Anschluss für den Wasserzulauf zur Anschlusseinrichtung und der Anschluss für den Wasserrücklauf von der Anschlusseinrichtung konzentrisch um eine zentrale Achse angeordnet sind,
und wobei das Anschlussstück eine Bohrung für ein Befestigungselement aufweist.

Eine solche Wasseranschlussanordnung ist bekannt geworden durch die DE 195 29 189 C2. Dieses Dokument wird als nächstliegender Stand der Technik angesehen.

Ein Anschlussstück wird eingesetzt als Verbindungselement für Wasserbehandlungsgeräte wie Filter, Enthärtungsanlagen, Kalkschutzgeräte, Dosierpumpen oder Durchflussüberwachungsgeräte mit einer Hausinstallation. Der Vorteil eines derartigen Anschlussstückes besteht darin, dass es bereits in der Rohbauphase in die Rohrleitung eines Wassernetzes eingebaut werden kann, wobei es typischerweise zunächst mit einem Blindflanschdeckel versehen wird. Die eigentliche Montage des Wasserbehandlungsgerätes kann auf einen späteren Zeitpunkt nach der Rohbauphase verschoben werden. Dies vermeidet Beschädigungen empfindlicher Wasserbehandlungsgeräte.

Weiterhin kann ein Wasserbehandlungsgerät später jederzeit leicht getauscht oder ergänzt werden, wenn sich beispielsweise die Wasserqualität oder die eigenen Ansprüche an eine Wasseraufbereitung ändern. Ein aufwändiger Eingriff in das Rohrleitungssystem ist dann nicht erforderlich.

In DE 195 29 189 C2 wird das Wasserbehandlungsgerät am Anschlussstück mittels vier Schrauben befestigt, die in Bajonettbohrungen des Anschlussstückes gesteckt werden und nach Drehung des Wasserbehandlungsgerätes bis zum Anschlag festgezogen werden. Dieses Vorgehen ist in der Praxis jedoch mühsam und zeitaufwändig. Hinzu tritt, dass die vier Schrauben an der Rückseite des Wasserbehandlungsgerätes schwer zugänglich sind, besonders bei in der Praxis oftmals auftretenden geringen Wandabstanden der Rohrleitung.

Aus der EP 1 128 120 A2 ist ein Verbindungsstück für Doppelrohre bekannt geworden. Ein Basisteil, mit zwei gegeneinander versetzen, zueinander parallelen Rohrenden, führt einen geraden Rohrabschnitt und einen gebogenen Rohrabschnitt zu einem Hauptteil, der mit einem Kernrohr und einem ringförmig umgebenden Außenrohr verläuft. Die beiden Rohrenden werden in einen Vereinigungskörper eingesteckt. Das Basisteil und der Vereinigungskörper werden mit einem Bolzen miteinander verspannt.

Die US 6,390,509 B1 beschreibt eine verdeckte Verbindungseinrichtung für einen Heißwasserreaktor. Eine Ankeraufnahme bildet eine Kugelpfanne zur Aufnahme eines Kugelkopfes eines gekrümmten Ersatzrohrs aus. Eine Kopplungseinrichtung überspannt eine Verzweigungsbox. Ein schraubenartiger Stab durchragt die Kopplungseinrichtung, die Verzweigungsbox und das Ersatzrohr; der Stab wird mittels einer Mutter und einem Gewinde verspannt.

Die EP 1 247 909 A2 beschreibt eine Anschlussanordnung für eine Wasserarmatur mit einem Montagestutzen, in dem zwei getrennte Leitungsbereiche gebildet sind. Ein Anschlusszwischenstück wird an dem Anschlussstück mittels einer Überwurfmutter befestigt.

### Aufgabe der Erfindung

Es ist Aufgabe der vorliegenden Erfindung, das Anschließen einer Anschlusseinrichtung, insbesondere eines Wasserbehandlungsgeräts, an eine Rohrleitung eines Hauswassernetzes zu vereinfachen und zu beschleunigen.

### Kurze Beschreibung der Erfindung

Diese Aufgabe wird gelöst durch eine Wasseranschlussanordnung der eingangs genannten Art, die dadurch gekennzeichnet ist, dass das Anschlussstück und die Anschlusseinrichtung mit genau einem Befestigungselement aneinander befestigt sind, so dass eine kraftschlüssigen Verbindung zwischen Flansch und Gegenflansch eingerichtet ist, wobei das genau eine Befestigungselement in die Bohrung des Anschlussstücks eingeführt ist, und dass die Bohrung derart im Anschlussstück angeordnet ist, dass deren Längsachse die Fläche des Flansches zentral und rechtwinklig schneidet, wobei die Bohrung in einem nicht wasserberührenden (nicht wasserführenden) Bereich des Anschlussstückes angeordnet ist.

Die Erfindung schlägt vor, den Flansch des Anschlussstückes und den Gegenflansch der Anschlusseinrichtung (typischerweise ein Wasserbehandlungsgerät) mit nur einem Befestigungselement (z.B. eine Schraube, ein Gewindebolzen oder eine Gewindestange mit entsprechender Mutter) kraftschlüssig zu verbinden. Das Befestigungselement kann mit wenigen Handgriffen schnell festgezogen werden; das Wasserbehandlungsgerät ist dann fertig installiert.

Die Fixierung kann am einfachsten mittels einer Schraube und einer Bohrung mit passendem Gewinde im Anschlussstück erfolgen. Zur Herstellung einer kraftschlüssigen Verbindung zwischen Anschlussstück und Anschlusseinrichtung wird typischerweise die Schraube durch eine Öffnung an der dem Gegenflansch gegenüberliegenden Vorderseite (hier) des Wasserbehandlungsgerätes sowie durch den Gegenflansch und den Flansch in das Anschlussstück geführt und im Gewinde des Anschlussstückes festgezogen.

Die Bohrung des Anschlussstücks, in die (hier) die Schraube eingeführt wird, ist dazu von der Vorderseite des Anschlussstücks (an der der Flansch ausgebildet ist) zugänglich, d.h. an dieser Seite offen.

Die Bohrung kann dabei als Sackloch-Bohrung mit einseitig geschlossenem Ende ausgebildet sein. Alternativ ist auch eine durchgehende Bohrung im Anschlussstück denkbar (diese umfasst in der Regel eine Mehrzahl von durchbohrten Wandungen des Anschlussstücks, wobei die Durchbrüche der Wandungen jeweils auf derselben Längsachse liegen). Die Schraube kann in diesem Fall das komplette Anschlussstück von der Vorderseite des Anschlussstückes bis zu dessen Rückseite durchdringen.

Im Falle von durchgehenden Bohrungen im Anschlussstück und in der Anschlusseinrichtung kann als Befestigungselement auch ein Gewindebolzen bzw. eine Gewindestange dienen; die Fixierung erfolgt dann mittels einer entsprechenden Mutter (am überstehenden Ende des Gewindebolzens bzw. der Gewindestange). Die Mutter ist bevorzugt an der dem Anschlussstück abgewandten Seite der Anschlusseinrichtung (also der Gerätevorderseite) angeordnet; die Mutter kann jedoch auch an der der Anschlusseinrichtung abgewandten Seite des Anschlussstücks (also der Wandseite) angeordnet sein.

Die Montage eines Wasserbehandlungsgerätes am Anschlussstück durch Festziehen lediglich einer Schraube bzw. einer Mutter ist einfach und schnell durchführbar. Die Montage kann im Rahmen der Erfindung von der Gerätevorderseite aus erfolgen und ist somit besonders komfortabel auch bei engen Platzverhältnissen mit kleinem Wandabstand der Rohrleitung.

Erfindungsgemäß ist vorgesehen, dass die Bohrung derart im Anschlussstück angeordnet ist, dass deren Längsachse die Fläche des Flansches zentral und rechtwinklig schneidet. Das Befestigungselement durchragt also die Flanschöffnung gerade und mittig. Die zentrale Position der Bohrung garantiert, dass bei Herstellung der kraftschlüssigen Verbindung zwischen Flansch und Gegenflansch Dichtelemente, die zwischen Flansch und Gegenflansch angeordnet sind, gleichmäßig belastet werden und Undichtigkeiten vermieden werden.

Weiterhin ist die Bohrung in einem nicht wasserberührenden (nicht wasserführenden) Bereich des Anschlussstückes angeordnet. Das Befestigungselement liegt somit in einem trockenen Bereich; der zylindrische Hohlraum, der das Befestigungselement aufnimmt, wird abgedichtet. Eine Abdichtung des Befestigungselementes nach außen ist dann nicht notwendig. Dies ist besonders vorteilhaft bei Verwendung von Gewindestange bzw. -bolzen als Befestigungselement, die mit einer Mutter gekontert werden, da hier eine Abdichtung aufwändig ist.

Zudem sind derAnschluss für den Wasserzulauf zur Anschlusseinrichtung und der Anschluss für den Wasserrücklauf von der Anschlusseinrichtung konzentrisch um eine zentrale Achse angeordnet. Die Anschlüsse von Wasserzulauf und Wasserrücklauf können dabei rotationssymmetrisch ausgebildet sein oder eine Zähligkeitssymmetrie, insbesondere eine Vierzähligkeit (etwa mit näherungsweise quadratischen Anschlüssen), aufweisen. Das Anschlussstück kann in verschiedenen Orientierungen (bei rotationssymmetrischem Aufbau universell in beliebigen Orientierungen) eingesetzt werden. Insbesondere kann die Wasseranschlussanordnung sowohl in waagrechte als auch in senkrechte Leitungen eingebaut werden. Die Fließrichtung des Wassers spielt dabei keine Rolle (von links nach rechts oder umgekehrt bzw. von oben nach unten oder umgekehrt). Es ist möglich, das Wasserbehandlungsgerät in verschiedene Lagen zum Rohr auszurichten (bevorzugt senkrecht oder waagrecht oder auch beliebig). Außerdem wird bei konzentrischer Anordnung von Wasserzulauf und Wasserrücklauf eine gleichmäßige Kraft auf die Dichtelemente durch das zentrale Befestigungselement ausgeübt.

### Bevorzugte Ausführungsformen der Erfindung

Bevorzugt ist eine Ausführungsform, bei der die Anschlusseinrichtung als Wasserbehandlungsgerät ausgebildet ist.

Bei einer vorteilhaften Ausführungsform ist die Bohrung als Sacklochbohrung im Anschlussstück ausgebildet. Eine Abdichtung des Befestigungselementes (Schraube bzw. Gewindebolzen oder Gewindestange) ist nicht notwendig, selbst wenn die Bohrung und damit auch das Befestigungselement im wasserführenden Bereich angeordnet ist. Zur Montage des Wasserbehandlungsgerätes wird beispielsweise eine Schraube von vorne durch das Gerät geführt und in einem Gewinde in der Sacklochbohrung festgeschraubt. Das Sackloch ist bevorzugt von der Seite des Flansches aus zugänglich, beispielsweise durch die Öffnung des Flansches. Das Sackloch weist typischerweise ein Gewinde auf, um das Befestigungselement (meist eine Schraube) halten zu können.

Bei einer alternativen Ausführungsform ist die Bohrung als durchgehende Bohrung im Anschlussstück ausgebildet ist. Die Bohrung ist also nach außen hin offen an zwei gegenüberliegenden Seiten. Die durchgehende Bohrung kann mehrere Wände, insbesondere zwei gegenüberliegende Außenwände des Anschlussstücks durchstoßen. Als Befestigungselement wird typischerweise eine Schraube oder ein Schraubbolzen eingesetzt, der mit einer Mutter gekontert wird. Die Anschlusseinrichtung weist typischerweise eine weitere Bohrung zur Aufnahme des genau einen Befestigungselements auf; diese weitere Bohrung kann ebenfalls als Sacklochbohrung oder als durchgehende Bohrung in der Anschlusseinrichtung ausgebildet sein. Mit dieser Ausführungsform ist eine besonders einfache und kostengünstige Konstruktion möglich, weil bekannte Anschlussstücke lediglich mit einer (bevorzugt zentralen) Bohrung ausgestattet werden müssen. Das Befestigungselement wird nach außen abgedichtet, wenn es im wasserführenden Bereich des Anschlussstückes angeordnet ist. Die Montage eines Wasserbehandlungsgerätes kann beispielsweise mittels einer im Anschlussstück vormontierten Gewindestange durch Festschrauben einer Mutter an der Gerätevorderseite oder mittels einer im Wasserbehandlungsgerät vormontierten Gewindestange durch Festschrauben einer Mutter an der Rückseite des Anschlussstückes erfolgen.

Bei einer vorteilhaften Ausführungsform ist weiterhin eine Zentrierhilfe für die Einführung des Befestigungselementes in die Bohrung vorgesehen. Dies erleichtert die Montage; die Schraube bzw. der Gewindebolzen oder die Gewindestange lassen sich schnell und einfach in die Bohrung einführen.

Gemäß einer vorteilhaften Weiterbildung dieser Ausführungsform umfasst die Zentrierhilfe eine Einführschräge. Die Einführschräge ist um die Bohrung herum angeordnet und führt das Befestigungselement korrekt in die vorgesehene Bohrung ein, selbst wenn die Schraube, der Gewindebolzen oder die Gewindestange nicht exakt angesetzt werden.

Besonders bevorzugt ist eine Ausführungsform, bei der im Gehäuse der an das Anschlussstück angeschlossenen Anschlusseinrichtung eine weitere Bohrung für die Aufnahme des Befestigungselementes derart angeordnet ist, dass deren Längsachse die Flächen des Flansches und des Gegenflansches zentral und rechtwinklig schneidet. Das Befestigungselement durchragt also die Flanschöffnung und die Gegenflanschöffnung gerade und mittig. Das Befestigungselement wird durch die weitere Bohrung in das Wasserbehandlungsgerät und zum Anschlussstück geführt. Der Anschluss des Wasserbehandlungsgerätes an die Rohrleitung erfolgt dann bequem und schnell durch Festziehen des einen, in der Regel zentral angeordneten Befestigungselementes von der Gerätevorderseite aus. Die gerade und mittige Führung der weiteren Bohrung trägt zu einem gleichmäßigen Krafteintrag in Flansch und Gegenflansch bei. Bohrung und weitere Bohrung sind typischerweise koaxial und haben zumindest im Wesentlichen gleichen Durchmesser.

Bevorzugt ist bei einer Ausführungsform eine Zentrierhilfe für die Verbindung von Flansch und Gegenflansch vorgesehen. Dadurch wird die Zentrierung der diversen Flanschdichtflächen von Flansch und Gegenflansch zueinander erleichtert; das Wasserbehandlungsgerät oder die Armatur kann schnell und sicher in der korrekten Position ausgerichtet werden.

Bei einer bevorzugten Weiterbildung dieser Ausführungsform ist die Zentrierhilfe als Zentrierring am Gegenflansch der Anschlusseinrichtung ausgebildet ist, wobei der Zentrierring mit dem Gegenflansch fest verbunden ist. Die Zentrierhilfe kann als preiswertes Spritzgussteil gefertigt werden und dient gleichzeitig als Halterung für die Dichtelemente während der Montage.

Eine vorteilhafte, andere Ausführungsform ist dadurch gekennzeichnet, dass als das eine Befestigungselement eine Schraube vorgesehen ist, insbesondere wobei zur Abdichtung der Schraube gegen das Gehäuse der Anschlusseinrichtung eine radiale Dichtung am Schraubenkopf angeordnet ist. Die radiale Schraubenkopfdichtung vermeidet ein Quetschen der Dichtung und Undichtigkeiten bei der Herstellung einer kraftschlüssigen Verbindung zwischen Flansch und Gegenflansch. Alternativ zur radialen Dichtung kann die Abdichtung der Schraube auch mittels einer Gummihülse nach dem Prinzip einer Flachdichtung erfolgen.

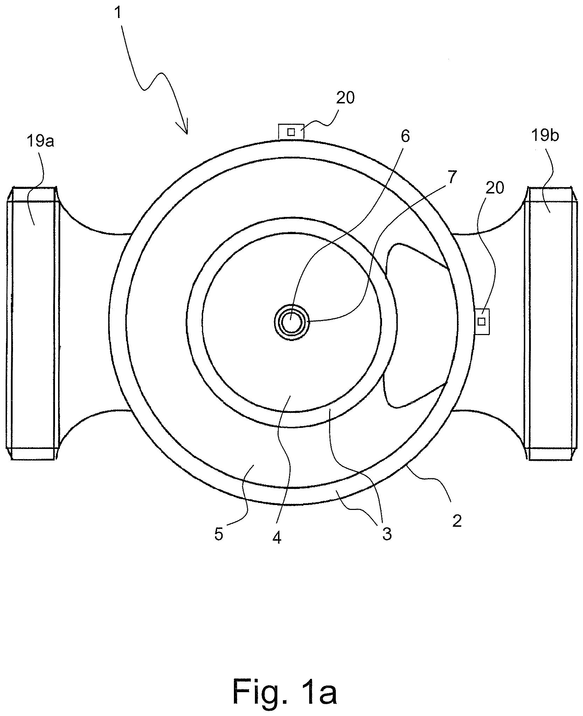

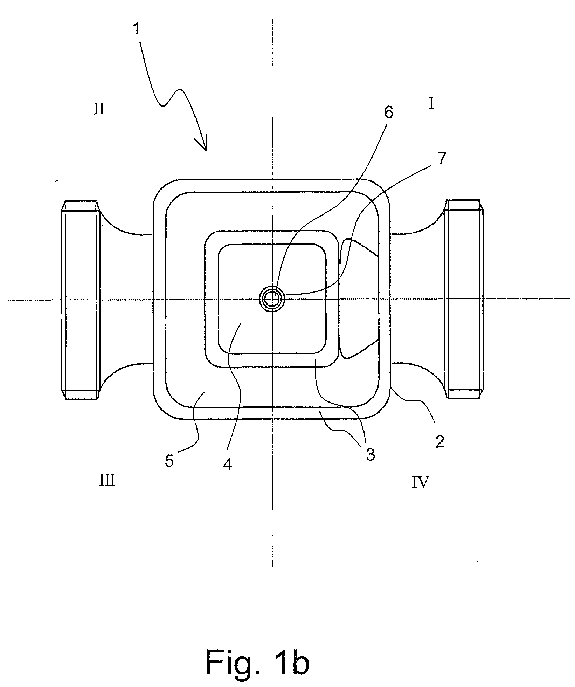

Bevorzugt ist auch eine Ausführungsform, bei der das Anschlussstück ein oder mehrere Justierelemente, insbesondere eine oder mehrere Justiernocken, zur Ausrichtung der Anschlusseinrichtung aufweist. Mit Hilfe von Justierelementen kann die relative Lage von Anschlussstück und Anschlusseinrichtung bei der Montage (und im darauf folgenden Einsatz) definiert und genau eingehalten werden. Die Montage kann einfach, schnell und exakt erfolgen. Mit mehreren Justierelementen können auch mehrere, alternative Positionen (etwa um 90° gegeneinander versetzt, etwa senkrecht und waagerecht) vorbereitet werden. Jedoch sind auch trotz Justierelementen andere, beliebige Einbaupositionen des Gerätes denkbar; hierzu können beispielsweise die Justierelemente als Justiernocken mit Vertiefungen im Anschlussstück ausgebildet sein, in die ein Vorsprung der Anschlusseinrichtung (oder ein an der Anschlusseinrichtung montierter Positionierungsstift) eingreift; wird keine der durch die Vertiefungen vordefinierten Positionen gewünscht, kann eine Anschlusseinrichtung ohne Vorsprung oder ohne montierten Positionierungsstift eingesetzt werden, oder die Justiernocken sind hinreichend schmal, so dass der Vorsprung oder der Positionierungsstift neben die Justiernocken greifen kann (vgl. Fig. 1).

Bevorzugt ist auch eine Ausführungsform, bei der zwischen Flansch und Gegenflansch Dichtelemente zum Abdichten des Wasserzulaufs gegen den Wasserrücklauf und/oder zum Abdichten des Wasserzulaufs gegen die Umgebung und/oder zum Abdichten des Wasserrücklaufs gegen die Umgebung angeordnet sind. Die Dichtelemente sind typischerweise aus Gummi gefertigt und gestatten eine gute Dichtigkeit auch bei höherem Wasserdruck. Die Dichtelemente sind bevorzugt austauschbar.

In den Rahmen der vorliegenden Erfindung fällt auch ein Verfahren zur Montage einer Wasseranschlussanordnung, umfassend
- ein Anschlussstück zum Einbau in die Rohrleitung eines Wassernetzes, insbesondere eines Hauswassernetzes,
- und eine Anschlusseinrichtung, insbesondere ein Wasserbehandlungsgerät oder eine Armatur,
wobei das Anschlussstück einen Flansch zum Anschließen der Anschlusseinrichtung und die Anschlusseinrichtung einen dazu passenden Gegenflansch aufweist,
wobei in der Flanschebene des Flansches sowohl ein Anschluss für einen Wasserzulauf zur Anschlusseinrichtung als auch ein Anschluss für einen Wasserrücklauf von der Anschlusseinrichtung ausgebildet ist,
wobei der Anschluss für den Wasserzulauf zur Anschlusseinrichtung und der Anschluss für den Wasserrücklauf von der Anschlusseinrichtung konzentrisch um eine zentrale Achse angeordnet sind,
insbesondere wobei die Wasseranschlussanordnung ausgebildet ist gemäß einem der vorhergehenden Ansprüche,
dadurch gekennzeichnet, dass das Anschlussstück und die Anschlusseinrichtung mit genau einem Befestigungselement aneinander befestigt werden, so dass eine kraftschlüssigen Verbindung zwischen Flansch und Gegenflansch eingerichtet wird,
wobei das genau eine Befestigungselement in eine Bohrung in einem nicht wasserberührenden Bereich des Anschlussstücks eingeführt wird, wobei die Bohrung derart im Anschlussstück angeordnet ist, dass deren Längsachse die Fläche des Flansches zentral und rechtwinklig schneidet. Mit dem erfindungsgemäßen Verfahren kann eine Anschlusseinrichtung, etwa ein Wasserbehandlungsgerät, einfach, schnell und sicher an eine Rohrleitung mittels des Anschlussstücks angeschlossen werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand eines Ausführungsbeispiels näher erläutert. Es zeigt:
- Fig. 1a: eine flanschseitige Seitenansicht eines am Flansch rotationssymmetrischen Anschlussstückes für eine erfindungsgemäße Wasseranschlussanordnung;
- Fig. 1b: eine flanschseitige Seitenansicht eines weiteren Anschlussstückes mit am Flansch vierzähliger Drehachse für eine erfindungsgemäße Wasseranschlussanordnung;
- Fig. 2: einen detaillierten Längsschnitt durch eine Ausführungsform einer erfindungsgemäßen Wasseranschlussanordnung, mit angeschlossenem Filter und Befestigungselement in einem nicht wasserführenden Bereich;
- Fig. 3: einen detaillierten Längsschnitt durch eine Bauform einer Wasseranschlussanordnung mit angeschlossenem Filter und Befestigungselement in einem wasserführenden Bereich zur allgemeinen Erläuterung;
- Fig. 4: eine isometrische Darstellung einer erfindungsgemäßen Wasseranschlussanordnung eingebaut in eine Rohrleitung;
- Fig. 5: eine schematische Seitenansicht einer erfindungsgemäßen Wasseranschlussanordnung mit durchgehender Bohrung im Anschlussstück und durchgehender Bohrung in der Anschlusseinrichtung.

Die **Fig. 1a** zeigt ein Anschlussstück 1 für die Erfindung mit einem Flansch 2, Dichtflächen 3, einem zentralen Zulauf 4 für Wasser zu einem Wasserbehandlungsgerät oder einer anderen Anschlusseinrichtung (Wasserarmatur, etc.), einem Ringkanal als Rücklauf 5 für Wasser vom Wasserbehandlungsgerät und einer zentralen Bohrung 6. Die Längsachse der Bohrung 6 geht durch den Mittelpunkt der durch die rotationssymmetrischen Dichtflächen 3 definierten Kreisbögen. Die Bohrung 6 ist von einer trichterartigen Einführschräge 7 umgeben, die als Zentrierhilfe für eine Schraube, einen Gewindebolzen oder eine Gewindestange beim Einführen in die Bohrung 6 dient. Das Anschlussstück 1 wird mit den rohrleitungsseitigen Enden 19a, 19b an eine Rohrleitung (nicht dargestellt in Fig. 1a) einer Hausinstallation angeschlossen.

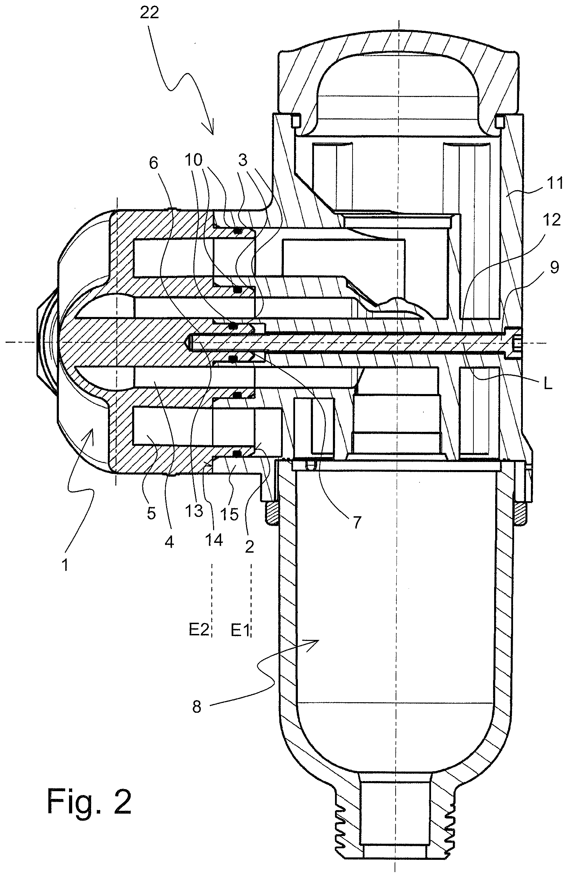

Durch den rotationssymmetrischen Aufbau des Anschlussstückes 1 im Bereich des Flansches 2 ist eine Montage des Wasserbehandlungsgerätes (nicht dargestellt, vgl. dazu Figur 2) in senkrechter, waagrechter oder in jeder anderen beliebigen Position möglich. Die Justierung des Wasserbehandlungsgerätes in einer bevorzugten Position (z.B. waagrechte oder senkrechte Lage) kann mittels Justiernocken 20 in 90° Position am Anschlussstück erfolgen; am Gegenflansch des Wasserbehandlungsgeräts (nicht dargestellt) ist dazu ein Vorsprung (Nase) ausgebildet, der in eine Vertiefung einer der Justiernocken 20 eingreift. Es ist dann möglich, das Wasserbehandlungsgerät schnell und einfach verdrehsicher in exakt waagrechter bzw. senkrechter Position auszurichten, oder (trotz Justiernocken) in beliebiger Position einzubauen (wenn der Vorsprung in keine der Justiernocken eingreift).

Die radial äußere der Dichtflächen 3 definiert mit ihrer (in Fig. 1a dem Betrachter zugewandten) Vorderkante die Flanschebene des Flansches 2. Der innerhalb der äußeren Dichtfläche 3 liegende Bereich der Flanschebene entspricht der Flanschfläche des Flansches 2.

**Fig. 1b** zeigt eine alternative Ausführungsform eines Anschlussstückes 1 für die Erfindung mit vierzähliger Drehachse (vierzähliger Zähligkeits-Symmetrieachse, vgl. die vier gleichartigen Sektoren I, II, III, IV) des Flansches 2. Hier ist durch die vorgegebene quadratische Grundform des Flansches 2 der Anschluss eines Wasserbehandlungsgerätes (nicht dargestellt in Fig. 1b) in waagrechter oder senkrechter Position möglich. Das Position des Gerätes kann durch Drehung um 90° gewechselt werden. Justiernocken sind hier nicht erforderlich.

Die Längsachse der Bohrung 6 fällt mit der vierzähligen Drehachse zusammen und verläuft im Zentrum des Flansches 2 (bzw. im Zentrum der Dichtflächen 3, hier jeweils mit gleichem Abstand zu den vier Seiten der Dichtflächen 3). Wasserzulauf 4 und Wasserrücklauf 5 liegen koaxial mit der vierzähligen Drehachse.

In **Fig. 2** ist eine Wasseranschlussanordnung 22 mit einem Anschlussstück 1 in einer speziellen Ausführungsform mit einem angeschlossenen, wasserbehandelnden Filter als Anschlusseinrichtung 8 dargestellt. Die Anschlusseinrichtung 8 und das Anschlussstück 1 sind mit Hilfe einer zentral angeordneten Schraube als Befestigungselement 9 sowie den Dichtelementen 10 kraftschlüssig und dicht miteinander verbunden.

Zum Anschließen der Anschlusseinrichtung 8 an das Anschlussstück 1 wird lediglich das Befestigungselement 9 durch eine das Grundgehäuse 11 der Anschlusseinrichtung (des Filters) 8 durchdringende (durchgehende) weitere Bohrung 12 geführt und in das Gewinde der Bohrung 6 im Anschlussstück 1 eingeschraubt. Dabei zentriert eine Einführschräge 7 das Befestigungselement (die Schraube) 9 beim Einschrauben in das Gewinde der Bohrung 6.

Die weitere Bohrung 12 ist so positioniert, dass deren Längsachse L die Fläche des Flansches 2 (die in der Flanschebene E1 radial innerhalb des Flansches 2 liegt) und die Fläche eines Gegenflansches 14 (die in der Gegenflanschebene E2 radial innerhalb des Gegenflansches 14 liegt) rechtwinklig und zentral schneidet und somit identisch ist mit der Längsachse 13 der zentralen Bohrung 6.

Zur einfachen Zentrierung der Dichtflächen 3 von Flansch 2 des Anschlussstückes 1 und Gegenflansch 14 der Anschlusseinrichtung 8 ist ein Zentrierring 15 am Außenbereich des Gegenflansches 14 vorgesehen, der über den äußeren Bereich des Flansches 2 ragt. Der Zentrierring 15 dient außerdem der Fixierung der Dichtelemente 10 vor Herstellung der kraftschlüssigen Verbindung zwischen Flansch 2 und Gegenflansch 14. Hierzu werden die Dichtelemente 10 in den Zentrierring 15 eingelegt und dort festgeklemmt.

Die in Fig. 2 dargestellten Dichtelemente 10 zwischen Flansch 2 und Gegenflansch 14 dichten in Umfangsrichtung ab. Alternativ kann auch eine Flachdichtung (oder es können mehrere Flachdichtungen) zwischen Flansch 2 und Gegenflansch 14 gepresst werden.

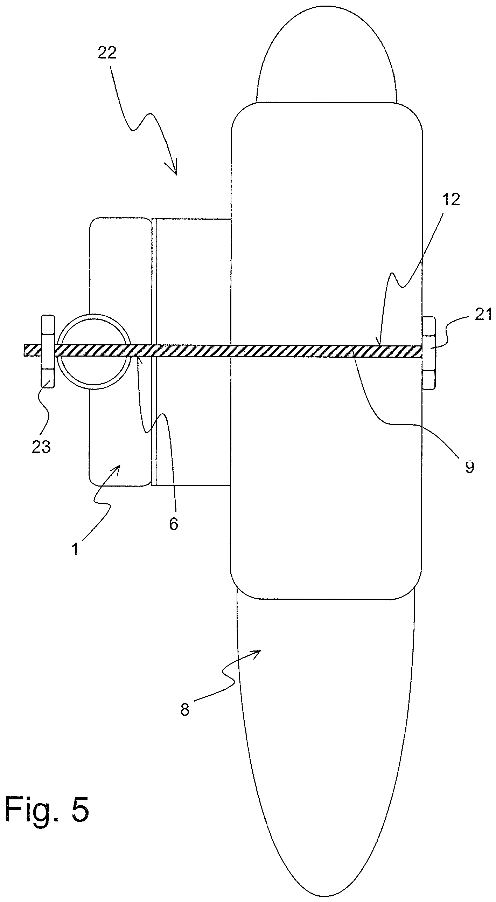

Die Bohrung 6 in Fig. 2 ist als Sacklochbohrung ausgestaltet; eine Abdichtung nach außen ist nicht notwendig. Das rechtsseitige Ende der Bohrung 6 ist offen und der Anschlusseinrichtung 8 zugewandt; das linksseitige Ende ist geschlossen. Alternativ kann die Bohrung 6 auch durchgängig durch das Anschlussstück 1 verlaufen. In letzterem Fall kann zur Montage des Filters an das Anschlussstück 1 auch ein Gewindebolzen bzw. eine Gewindestange mit Mutter verwendet werden (vgl. Fig. 5).

Im gezeigten Beispiel befindet sich das Befestigungselement (die Schraube) 9 in einem nicht wasserführenden Bereich des Anschlussstückes 1 und Anschlusselements 8. Es ist deshalb nicht erforderlich, die Schraube selbst nach außen abzudichten.

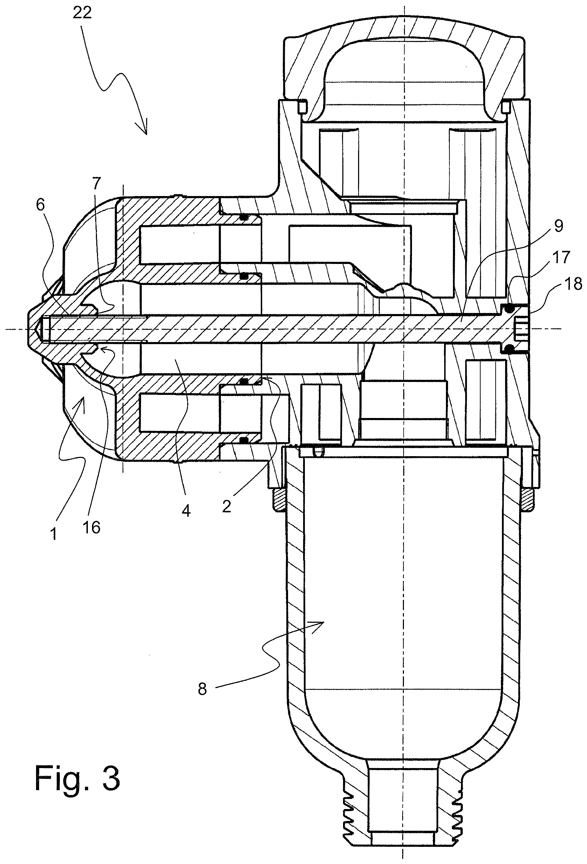

Die **Fig. 3** zeigt eine Bauform einer Wasseranschlussanordnung 22 zur allgemeinen Erläuterung; im Folgenden werden nur die Unterschiede gegenüber der Ausführungsform in Fig. 2 erläutert.

Die Bohrung 6 mit Einführschräge 7 zum Einschrauben des Befestigungselements (der Schraube 9) befindet sich an der dem Flansch 2 gegenüberliegenden Innenseite 16 des Anschlussstückes 1. Diese Ausführungsform ist besonders einfach, da beispielsweise aus DE 195 29 189 C2 bekannte Anschlussstücke statt mit mehreren Bajonettbohrungen lediglich mit der einen Bohrung 6 ausgestattet werden müssen.

Das Befestigungselement 9 ist im Zulauf 4 zur Anschlusseinrichtung (zum Filter) 8 positioniert, so dass dieses nach außen mittels einer Dichtung 17 am Filter abgedichtet werden muss. Eine in der Figur dargestellte radiale Dichtung 17 am Schraubenkopf 18 hat sich besonders bewährt, weil dadurch ein Quetschen der Dichtung 17 und damit die Gefahr von Undichtigkeiten beim Festziehen der Schraube vermieden werden. Prinzipiell kann die Schraube jedoch auch mit einer Flachdichtung (z.B. in Form einer Gummihülse) nach außen abgedichtet werden.

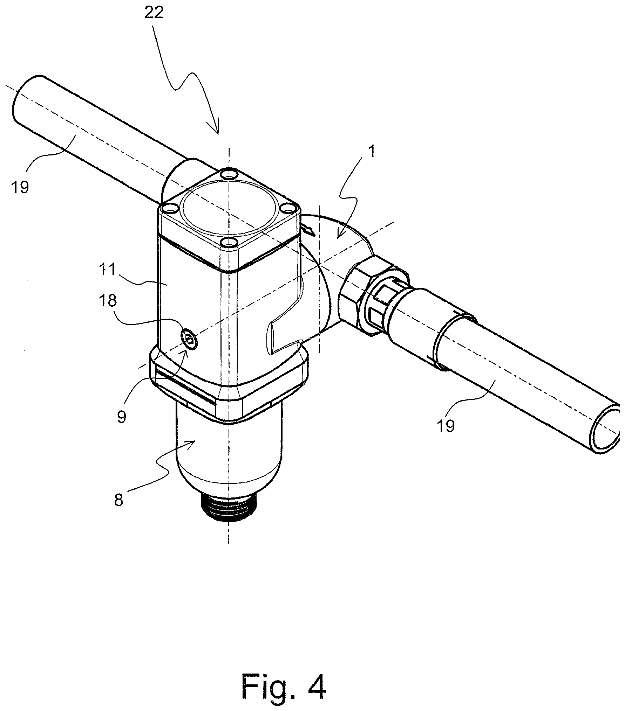

**Fig. 4** zeigt eine isometrische Darstellung einer erfindungsgemäßen Wasseranschlussanordnung 22, umfassend ein Anschlussstück 1 und einen Filter als Anschlusseinrichtung 8, eingebaut in eine Rohrleitung 19. Die Anschlusseinrichtung 8 ist mittels eines einzigen Befestigungselements 9, hier einer einzigen Schraube, die durch das Grundgehäuse 11 der Anschlusseinrichtung in das Anschlussstück 1 führt, mit dem Anschlussstück 1 kraftschlüssig verbunden. Der Einbau des Filters (oder eines anderen beliebigen Wasserbehandlungsgerätes) in die Rohrleitung 19 ist dadurch besonders einfach und beansprucht wenig Zeit. Der Kopf 18 der Schraube ist von der Vorderseite der Anschlusseinrichtung 8 gut zugänglich; eine manuelle Konterung auf der Rückseite des Anschlussstücks 1 ist bei der Montage nicht erforderlich.

**Fig. 5** zeigt eine weitere Ausgestaltung einer Wasseranschlussanordnung 22 gemäß der Erfindung. Das Anschlussstück 1 weist hierbei eine durchgehende Bohrung 6 auf; ebenso weist die Anschlusseinrichtung 8 (etwa ein Wasserenthärtungsgerät) eine durchgehende, weitere Bohrung 12 auf.

Das Befestigungselement 9 ist als Schraubbolzen ausgebildet, der die Bohrung 6 und die weitere Bohrung 12 durchragt und auf der Seite des Anschlussstücks 1 übersteht. Dort ist eine sechskantige Mutter 23 aufgeschraubt, mit der das Anschlussstück 1 und die Anschlusseinrichtung 8 aneinander befestigt und gegeneinander verspannt sind. Der Kopf 21 des Schraubbolzens ist ebenfalls sechskantig ausgebildet und an der Gerätevorderseite angeordnet. Der Schraubbolzen kann somit von der Gerätevorderseite (in der Fig. 5 rechts) eingeschoben werden.

Zusammenfassend schlägt die vorliegende Erfindung vor, eine Anschlusseinrichtung, insbesondere ein Wasserbehandlungsgerät (etwa einen Wasserfilter) oder eine Wasserarmatur (etwa eine Zapfstelle) oder auch einen Blindflansch oder eine Umlenkplatte, mittels eines Anschlussstücks an die Rohrleitung eines Wassernetzes anzuschließen. Dabei weist das Anschlussstück eine Bohrung auf, die typischerweise durch die Öffnung des Flansches (zur Kopplung der Anschlusseinrichtung) zugänglich ist. Durch die Anschlusseinrichtung verläuft typischerweise eine durchgehende, weitere Bohrung, die zur Öffnung des Gegenflansches (zur Kopplung des Anschlussstücks) führt. Ein im Wesentlichen stabförmiges Befestigungselement, etwa eine Schraube, wird durch die weitere Bohrung der Anschlusseinrichtung, durch den Gegenflansch, durch den Flansch und in die Bohrung des Anschlussstücks geführt. Die Anschlusseinrichtung und das Anschlussstück werden lediglich mittels dieses einen Befestigungselements gegeneinander verspannt und in einer abgedichteten Stellung zueinander fixiert. Bevorzugt weist die Bohrung des Anschlussstücks ein Innengewinde auf, um mit einem Außengewinde des Befestigungselements beim Verspannen zusammenzuwirken; der Kopf des Befestigungselements hintergreift dabei die Anschlusseinrichtung. Ebenso ist es möglich, Anschlusseinrichtung und Anschlussstück mit einem Kopf des Befestigungselements und einer auf dem Befestigungselement aufgeschraubten Mutter zu umgreifen, wobei das Befestigungselement das Anschlussstück und die Anschlusseinrichtung vollständig durchragt. Durch die zentrale Lage von Bohrung und weiterer Bohrung bezüglich Flansch und Gegenflansch (und insbesondere deren Dichtflächen) kann auch bei nur einem Befestigungselement ein gleichmäßiger Krafteintrag in die Dichtelemente an den Dichtflächen und damit eine gleichmäßig gute Dichtwirkung erzielt werden, und das lediglich eine Befestigungselement erlaubt eine sehr schnelle und einfache Montage.

## Patentansprüche

1. Wasseranschlussanordnung (22), umfassend
- ein Anschlussstück (1) zum Einbau in die Rohrleitung (19) eines Wassernetzes, insbesondere eines Hauswassernetzes,
- und eine Anschlusseinrichtung (8), insbesondere ein Wasserbehandlungsgerät oder eine Armatur,
wobei das Anschlussstück (1) einen Flansch (2) zum Anschließen der Anschlusseinrichtung (8) und die Anschlusseinrichtung (8) einen dazu passenden Gegenflansch (14) aufweist,
wobei in der Flanschebene (E1) des Flansches (2) sowohl ein Anschluss für einen Wasserzulauf (4) zur Anschlusseinrichtung (8) als auch ein Anschluss für einen Wasserrücklauf (5) von der Anschlusseinrichtung (8) ausgebildet ist,
wobei der Anschluss für den Wasserzulauf (4) zur Anschlusseinrichtung (8) und der Anschluss für den Wasserrücklauf (5) von der Anschlusseinrichtung (8) konzentrisch um eine zentrale Achse (13) angeordnet sind,
und wobei das Anschlussstück (1) eine Bohrung (6) für ein Befestigungselement (9) aufweist,
**dadurch gekennzeichnet,**
**dass** das Anschlussstück (1) und die Anschlusseinrichtung (8) mit genau einem Befestigungselement (9) aneinander befestigt sind, so dass eine kraftschlüssigen Verbindung zwischen Flansch (2) und Gegenflansch (14) eingerichtet ist,
wobei das genau eine Befestigungselement (9) in die Bohrung (6) des Anschlussstücks (1) eingeführt ist,
und **dass** die Bohrung (6) derart im Anschlussstück (1) angeordnet ist, dass deren Längsachse (13) die Fläche des Flansches (2) zentral und rechtwinklig schneidet,
wobei die Bohrung (6) in einem nicht wasserberührenden Bereich des Anschlussstückes (1) angeordnet ist.

2. Wasseranschlussanordnung (22) nach einem der vorhergehenden Ansprüche, **dadurch gekennzeichnet, dass** die Anschlusseinrichtung (8) als ein Wasserbehandlungsgerät ausgebildet ist.

3. Wasseranschlussanordnung (22) nach einem der vorhergehenden Ansprüche, **dadurch gekennzeichnet, dass** die Bohrung (6) als Sacklochbohrung im Anschlussstück (1) ausgebildet ist.

4. Wasseranschlussanordnung (22) nach einem der Ansprüche 1 oder 2, **dadurch gekennzeichnet, dass** die Bohrung (6) als durchgehende Bohrung im Anschlussstück (1) ausgebildet ist.

5. Wasseranschlussanordnung (22) nach einem der vorhergehenden Ansprüche, **dadurch gekennzeichnet, dass** eine Zentrierhilfe für die Einführung des Befestigungselementes (9) in die Bohrung (6) vorgesehen ist.

6. Wasseranschlussanordnung (22) nach Anspruch 5, **dadurch gekennzeichnet, dass** die Zentrierhilfe eine Einführschräge (7) umfasst.

7. Wasseranschlussanordnung (22) nach einem der vorhergehenden Ansprüche, **dadurch gekennzeichnet, dass** im Gehäuse (11) der an das Anschlussstück (1) angeschlossenen Anschlusseinrichtung (8) eine weitere Bohrung (12) für die Aufnahme des Befestigungselementes (9) derart angeordnet ist, dass deren Längsachse (L) die Flächen des Flansches (2) und des Gegenflansches (14) zentral und rechtwinklig schneidet.

8. Wasseranschlussanordnung (22) nach einem der vorhergehenden Ansprüche, **dadurch gekennzeichnet, dass** eine Zentrierhilfe für die Verbindung von Flansch (2) und Gegenflansch (14) vorgesehen ist.

9. Wasseranschlussanordnung (22) nach Anspruch 8, **dadurch gekennzeichnet, dass** die Zentrierhilfe als Zentrierring (15) am Gegenflansch (14) der Anschlusseinrichtung (8) ausgebildet ist, wobei der Zentrierring (15) mit dem Gegenflansch (14) fest verbunden ist.

10. Wasseranschlussanordnung (22) nach einem der vorhergehenden Ansprüche, **dadurch gekennzeichnet, dass** als das eine Befestigungselement (9) eine Schraube vorgesehen ist, insbesondere wobei zur Abdichtung der Schraube gegen das Gehäuse (11) der Anschlusseinrichtung (8) eine radiale Dichtung (17) am Schraubenkopf (18) angeordnet ist.

11. Wasseranschlussanordnung (22) nach einem der vorhergehenden Ansprüche, **dadurch gekennzeichnet, dass** das Anschlussstück (1) ein oder mehrere Justierelemente, insbesondere eine oder mehrere Justiernocken (20), zur Ausrichtung der Anschlusseinrichtung (8) aufweist.

12. Wasseranschlussanordnung (22) nach einem der vorhergehenden Ansprüche, **dadurch gekennzeichnet, dass** zwischen Flansch (2) und Gegenflansch (14) Dichtelemente (10) zum Abdichten des Wasserzulaufs (4) gegen den Wasserrücklauf (5) und/oder zum Abdichten des Wasserzulaufs (4) gegen die Umgebung und/oder zum Abdichten des Wasserrücklaufs (5) gegen die Umgebung angeordnet sind.

13. Verfahren zur Montage einer Wasseranschlussanordnung (22), umfassend
- ein Anschlussstück (1) zum Einbau in die Rohrleitung (19) eines Wassernetzes, insbesondere eines Hauswassernetzes,
- und eine Anschlusseinrichtung (8), insbesondere ein Wasserbehandlungsgerät oder eine Armatur,
wobei das Anschlussstück (1) einen Flansch (2) zum Anschließen der Anschlusseinrichtung (8) und die Anschlusseinrichtung (8) einen dazu passenden Gegenflansch (14) aufweist,
wobei in der Flanschebene (E1) des Flansches (2) sowohl ein Anschluss für einen Wasserzulauf (4) zur Anschlusseinrichtung (8) als auch ein Anschluss für einen Wasserrücklauf (5) von der Anschlusseinrichtung (8) ausgebildet ist,
wobei der Anschluss für den Wasserzulauf (4) zur Anschlusseinrichtung (8) und der Anschluss für den Wasserrücklauf (5) von der Anschlusseinrichtung (8) konzentrisch um eine zentrale Achse (13) angeordnet sind,
insbesondere wobei die Wasseranschlussanordnung (22) ausgebildet ist gemäß einem der vorhergehenden Ansprüche,
**dadurch gekennzeichnet,**
**dass** das Anschlussstück (1) und die Anschlusseinrichtung (8) mit genau einem Befestigungselement (9) aneinander befestigt werden, so dass eine kraftschlüssigen Verbindung zwischen Flansch (2) und Gegenflansch (13) eingerichtet wird,
wobei das genau eine Befestigungselement (9) in eine Bohrung (6) in einem nicht wasserberührenden Bereich des Anschlussstücks (1) eingeführt wird, wobei die Bohrung (6) derart im Anschlussstück (1) angeordnet ist, dass deren Längsachse (13) die Fläche des Flansches (2) zentral und rechtwinklig schneidet.

## Claims

1. Water connection arrangement (22), comprising
- a connection piece (1) for installation in the pipeline (19) of a water network, in particular a domestic water network,
- and a connection device (8), in particular a water treatment device or a fitting,
wherein the connection piece (1) has a flange (2) for connecting the connection device (8) and the connection device (8) has a matching counter flange (14),
wherein in the flange plane (E1) of the flange (2) both a connection for a water inlet (4) to the connection device (8) and a connection for a water return (5) from the connection device (8) are formed, wherein the connection for the water inlet (4) to the connection device (8) and the connection for the water return (5) from the connection device (8) are arranged concentrically around a central axis (13),
and wherein the connection piece (1) has a bore (6) for a fastening element (9),
**characterized in that**
the connection piece (1) and the connection device (8) are fastened to one another with exactly one fastening element (9) such that a frictional connection between the flange (2) and the counter flange (14) is created,
wherein the exactly one fastening element (9) is inserted into the bore (6) of the connection piece (1),
and that the bore (6) is arranged in the connection piece (1) such that the longitudinal axis (13) of the bore (6) intersects the face of the flange (2) centrally and at a right angle,
wherein the bore (6) is arranged in a region of the connection piece (1) which is not in contact with water.

2. Water connection arrangement (22) according to one of the preceding claims, **characterized in that** the connection device (8) is designed as a water treatment device.

3. Water connection arrangement (22) according to one of the preceding claims, **characterized in that** the bore (6) is designed as a blind hole in the connection piece (1).

4. Water connection arrangement (22) according to one of claims 1 or 2, **characterized in that** the bore (6) is formed as a through hole in the connection piece (1).

5. Water connection arrangement (22) according to one of the preceding claims, **characterized in that** a centering aid is provided for the introduction of the fastening element (9) in the bore (6).

6. Water connection arrangement (22) according to claim 5, **characterized in that** the centering aid comprises an insertion bevel (7).

7. Water connection arrangement (22) according to one of the preceding claims, **characterized in that** in the housing (11) of the connection device (8) connected to the connection piece (1), a further bore (12) for receiving the fastening element (9) is arranged such that the longitudinal axis (L) of the further bore (12) intersects the faces of the flange (2) and of the counter-flange (14) centrally and at a right angle.

8. Water connection arrangement (22) according to any one of the preceding claims, **characterized in that** a centering aid is provided for the connection of the flange (2) and the counter flange (14).

9. Water connection arrangement (22) according to claim 8, **characterized in that** the centering aid is designed as a centering ring (15) on the counter flange (14) of the connection device (8), wherein the centering ring (15) is firmly connected to the counter flange (14).

10. Water connection arrangement (22) according to one of the preceding claims, **characterized in that** a screw is provided as the one fastening element (9), in particular wherein a radial seal (17) is arranged on the screw head (18) for sealing the screw against the housing (11) of the connection device (8).

11. Water connection arrangement (22) according to one of the preceding claims, **characterized in that** the connection piece (1) has one or more adjusting elements, in particular one or more adjusting cams (20), for aligning the connection device (8).

12. Water connection arrangement (22) according to one of the preceding claims, **characterized in that** sealing elements (10) are arranged between the flange (2) and the counter flange (14) for sealing the water inlet (4) against the water return (5) and/or for sealing the water inlet (4) against the environment and/or for sealing the water return (5) against the environment.

13. Method for mounting a water connection arrangement (22), comprising
- a connection piece (1) for installation in the pipeline (19) of a water network, in particular a domestic water network,
- and a connection device (8), in particular a water treatment device or a fitting,
wherein the connection piece (1) has a flange (2) for connecting the connection device (8) and the connection device (8) has a matching counter flange (14),
wherein in the flange plane (E1) of the flange (2) both a connection for a water inlet (4) to the connection device (8) as well as a connection for a water return (5) from the connection device (8) are formed,
wherein the connection for the water inlet (4) to the connection device (8) and the connection for the water return (5) from the connection device (8) are arranged concentrically about a central axis (13),
in particular wherein the water connection device (22) is designed in accordance with one of the preceding claims,
**characterized in that**
the connection piece (1) and the connection device (8) are fastened to one another with exactly one fastening element (9) such that a frictional connection between the flange (2) and the counter flange (13) is created,
wherein the exactly one fastening element (9) is inserted into a bore (6) in a region of the connection piece (1) which is not in contact with water, wherein the bore (6) is arranged in the connection piece (1) in such a manner that the longitudinal axis (13) of the bore (6) intersects the face of the flange (2) centrally and at a right angle.

## Revendications

1. Ensemble (22) de prise d'eau, comprenant
- une pièce de raccordement (1) conçue pour l'intégration dans le conduit tubulaire (19) d'un réseau d'eau, en particulier d'un réseau d'eau domestique,
- et un dispositif de raccordement (8), en particulier un appareil de traitement de l'eau ou une robinetterie,
ladite pièce de raccordement (1) étant munie d'une bride (2) affectée au rattachement du dispositif de raccordement (8), et ledit dispositif de raccordement (8) étant pourvu d'une bride complémentaire (14) adaptée en conséquence,
à la fois un raccord destiné à un afflux d'eau (4) gagnant le dispositif de raccordement (8), et un raccord destiné à un reflux d'eau (5) partant dudit dispositif de raccordement (8), étant ménagés dans le plan (E1) de ladite bride (2),
sachant que ledit raccord destiné à l'afflux d'eau (4) gagnant le dispositif de raccordement (8), et ledit raccord destiné au reflux d'eau (5) partant dudit dispositif de raccordement (8), sont agencés concentriquement autour d'un axe médian (13),
et sachant que la pièce de raccordement (1) comporte un alésage (6) dédié à un élément de fixation (9),
**caractérisé par le fait**
**que** la pièce de raccordement (1) et le dispositif de raccordement (8) sont fixés l'un à l'autre à l'aide d'un élément de fixation (9) en nombre exactement unique, instaurant ainsi une liaison par engagement positif entre la bride (2) et la bride complémentaire (14),
ledit élément de fixation (9), en nombre exactement unique, étant inséré dans l'alésage (6) de ladite pièce de raccordement (1) ;
et par le fait que ledit alésage (6) occupe, dans ladite pièce de raccordement (1), un emplacement tel que l'axe longitudinal (13) dudit alésage coupe la surface de la bride (2) centralement et à angle droit,
lequel alésage (6) est situé dans une région de ladite pièce de raccordement (1) qui est exempte de contact avec l'eau.

2. Ensemble (22) de prise d'eau selon la revendication 1, **caractérisé par le fait que** le dispositif de raccordement (8) est réalisé sous la forme d'un appareil de traitement de l'eau.

3. Ensemble (22) de prise d'eau selon l'une des revendications précédentes, **caractérisé par le fait que** l'alésage (6) est pratiqué dans la pièce de raccordement (1) en tant que perçage borgne.

4. Ensemble (22) de prise d'eau selon l'une des revendications 1 ou 2, **caractérisé par le fait que** l'alésage (6) est pratiqué dans la pièce de raccordement (1) en tant que perçage traversant.

5. Ensemble (22) de prise d'eau selon l'une des revendications précédentes, **caractérisé par le fait qu'**un auxiliaire de centrage est prévu pour l'insertion de l'élément de fixation (9) dans l'alésage (6).

6. Ensemble (22) de prise d'eau selon la revendication 5, **caractérisé par le fait que** l'auxiliaire de centrage inclut un biseau d'introduction (7).

7. Ensemble (22) de prise d'eau selon l'une des revendications précédentes, **caractérisé par le fait qu'**un alésage supplémentaire (12) affecté à la réception de l'élément de fixation (9) occupe, dans le boîtier (11) du dispositif de raccordement (8) rattaché à la pièce de raccordement (1), un emplacement tel que l'axe longitudinal (L) dudit alésage coupe, centralement et à angle droit, les surfaces de la bride (2) et de la bride complémentaire (14).

8. Ensemble (22) de prise d'eau selon l'une des revendications précédentes, **caractérisé par le fait qu'**un auxiliaire de centrage est prévu pour la liaison de la bride (2) et de la bride complémentaire (14).

9. Ensemble (22) de prise d'eau selon la revendication 8, **caractérisé par le fait que** l'auxiliaire de centrage est réalisé sous la forme d'une bague de centrage (15), sur la bride complémentaire (14) du dispositif de raccordement (8), laquelle bague de centrage (15) est reliée rigidement à ladite bride complémentaire (14).

10. Ensemble (22) de prise d'eau selon l'une des revendications précédentes, **caractérisé par le fait qu'**une vis est prévue pour constituer l'élément de fixation (9) en nombre unique, sachant notamment qu'une garniture radiale d'étanchement (17) est placée sur la tête (18) de la vis, en vue d'assurer l'étanchéité de ladite vis par rapport au boîtier (11) du dispositif de raccordement (8).

11. Ensemble (22) de prise d'eau selon l'une des revendications précédentes, **caractérisé par le fait que** la pièce de raccordement (1) est dotée d'un ou plusieurs élément(s) d'ajustement, en particulier d'une ou plusieurs came(s) d'ajustement (20), en vue de l'orientation du dispositif de raccordement (8).

12. Ensemble (22) de prise d'eau selon l'une des revendications précédentes, **caractérisé par le fait que** des éléments d'étanchement (10) sont interposés entre la bride (2) et la bride complémentaire (14), en vue d'assurer l'étanchéité de l'afflux d'eau (4) par rapport au reflux d'eau (5) et/ou d'assurer l'étanchéité dudit afflux d'eau (4) par rapport à l'espace environnant et/ou d'assurer l'étanchéité dudit reflux d'eau (5) par rapport audit espace environnant.

13. Procédé de montage d'un ensemble (22) de prise d'eau comprenant
- une pièce de raccordement (1) conçue pour l'intégration dans le conduit tubulaire (19) d'un réseau d'eau, en particulier d'un réseau d'eau domestique,
- et un dispositif de raccordement (8), en particulier un appareil de traitement de l'eau ou une robinetterie,
ladite pièce de raccordement (1) étant munie d'une bride (2) affectée au rattachement du dispositif de raccordement (8), et ledit dispositif de raccordement (8) étant pourvu d'une bride complémentaire (14) adaptée en conséquence,
à la fois un raccord destiné à un afflux d'eau (4) gagnant le dispositif de raccordement (8), et un raccord destiné à un reflux d'eau (5) partant dudit dispositif de raccordement (8), étant ménagés dans le plan (E1) de ladite bride (2),
sachant que ledit raccord destiné à l'afflux d'eau (4) gagnant le dispositif de raccordement (8), et ledit raccord destiné au reflux d'eau (5) partant dudit dispositif de raccordement (8), sont agencés concentriquement autour d'un axe médian (13),
ledit ensemble (22) de prise d'eau étant notamment réalisé en conformité avec l'une des revendications précédentes,
**caractérisé par le fait**
**que** la pièce de raccordement (1) et le dispositif de raccordement (8) sont fixés l'un à l'autre à l'aide d'un élément de fixation (9) en nombre exactement unique, instaurant ainsi une liaison par engagement positif entre la bride (2) et la bride complémentaire (14),
ledit élément de fixation (9), en nombre exactement unique, étant inséré dans un alésage (6) situé dans une région de ladite pièce de raccordement (1) qui est exempte de contact avec l'eau, lequel alésage (6) occupe, dans ladite pièce de raccordement (1), un emplacement tel que l'axe longitudinal (13) dudit alésage coupe la surface de la bride (2) centralement et à angle droit.
